# EUROPEAN PATENT SPECIFICATION

(11) **EP 3 053 729 B1**
(45) Date of publication and mention of the grant of the patent: **16.12.2020**
(21) Application number: 15153787.5
(22) Date of filing: 04.02.2015
(51) Int. Cl.: B29C 67/00, B33Y 10/00, B33Y 50/02, B29C 64/393

(54) **Method for exposing a photo polymerizable material for solidification of material layer by layer to build a 3D object**
Verfahren zum Belichten eines photopolymerisierbaren Materials zur schichtweisen Verfestigung einer Materialschicht, um ein 3D-Objekt zu erstellen
Procédé d'exposition d'un matériau polymérisable photographique pour la solidification d'une couche de matériau par couche, afin de construire un objet 3D

(43) Date of publication of application: 10.08.2016
(73) Proprietor: VISITECH AS, 3003 Drammen (NO)
(72) Inventor: Jørgensen, Trond, N-3018 Drammen (NO); Kirkhorn, Endre, N-3031 Drammen (NO); Tafjord, Øyvind, N-3150 Tolvsrød (NO)
(74) Representative: Onsagers AS

(56) References cited:
- EP-A1- 1 344 633
- EP-A1- 1 864 785
- EP-A1- 2 116 901
- JP-A- H03 281 329
- US-A1- 2002 164 069

## Description

The invention regards a method for exposing a photo polymerizable material, for solidification of the material layer by layer, in order to build a 3D object from the polymerizable material.

### BACKGROUND:

Various 3D printers using space modulator electronic projectors (utilizing e.g. DLP technology) are well known in the market. The light energy from the projectors is used to cure light sensitive materials in layers to form a 3D object. Such methods are described in "Automatic Fabrication-Improving Productivity in Manufacturing" of Marshall Burns, 1993 (ISBN 0-13-119462-3)

This process is traditionally using a nominal 1:1 relationship in resolution from projected image to the solidificated X and Y resolution. Hence, large building areas are either obtained by increasing the pixel size using e.g. magnification in the optics or moving the projector in a flash and step mode where a static exposure image is moved after exposure of each image (FIGURE#1) in a pattern to cover a larger building area. Similar 3D printers, also known as SLM machines, using laser a beam as electronic light source will have maximum resolution determined by the shape and form of the laser beam.

Even though the demand for larger building areas is increasing, the requirement for obtaining the same high resolution (small pixel size), as is the case for small building areas, or even increased resolution is present. Some methods are developed, such as use of mechanical high frequency motion of either the exposure unit or the table to create higher resolution, but the building area size is still not increased.

### OBJECT OF THE INVENTION

The invention relates to a process and a device for exposing a photo polymerizable material for solidification of material layer by layer to build a 3D object. Typical usage will be in 3D printers, rapid prototyping machines, rapid manufacturing machines and similar layer by layer build process equipment.

The object of the invention is to provide a process capable of increasing the resolution of the solidificated material compared to the static image of projected light, delivered by an electronic light projector, by using image scrolling while the light projector is in motion relative to the exposed material. The image scrolling technique enables the possibility to enhance the resolution beyond what is limited by the native pixel size (FIGURE#2). Several methods for the subpixelation are present, as e.g described in patent by Robin Pagan/MIVA technologies (EP2116901). The use of image scrolling light projectors for building 3D objects is described in pat no. EP1344633/JP03792168). The image scrolling is synchronized by a trigger signal coming from the motion controller.

The object of the invention is achieved by means of the features of the patent claims.

The projected image on the material will during motion be scrolled over the material in a way that the image pattern exposed on the material will be similar to the data strip stored in the machine computer. Such data strip will contain multiple images, each image similar to one instant image exposed from the projector, stitched together forming a continues image strip, similar to a seamless film strip (FIGURE#3)

This technique will solve the main problem which is not solved by other known techniques:
- The building area can in theory be infinite, as it is no longer limited by the image size, but of the size (length along the x axis) of the machine on where the light projector is assembled. This will enable the possibility to exposure multiple small 3D objects or one large 3D object. The light projector will be moved relative to the material along the x axis back and forth over the material to be solidificated (FIGURE#4). This technique can be utilized for machines where the electronic light projector is placed at the top or at the bottom, so that the material can be photo polymerized from both above and below depending on the application and the machine concept (FIGURE#5). As the instant image of the light projector is kept small, the pixel size is also kept small. Hence, the resolution can still be high.

In addition, by utilizing image scrolling technique, more advantages are gained:
- The building area (the distance along the x axis) can be user programmable (FIGURE#6) through the SW control of the machine and the data file, and thus the x distance and hence the building speed can be dynamically adjusted to fit the size of the 3D object to be build. This will imply that the building speed will increase compared to light projectors that only have a static image size and thus have a static building area independent of the actual 3D object to be build
- In order to increase the building area even further, an y-axis can be added to the machine (FIGURE#7), so that the light projector moves along the y axis in steps relatively to the material after having scrolled along the axis, making the building area even larger.
- In order to speed up the building process even further, one can add multiple light projectors (FIGURE#8 and FIGURE#9) assembled on the machine so that their motion is parallel along the x axis.
- The pixel resolution can be increased even further than the native pixel size in the projected image by utilizing subpixelation methods as e.g. the method patented by Robin Pagan/MIVA technologies technique. The sub-pixelation feature can only be utilized when image scrolling is implied. The Optical Multiplexing technique described by Robin Pagan enables the functionality of a dynamic resolution (level of optical multiplexing level) adjustment through the SW interface of the machine
- Implementing the dynamic resolution described above will not affect the exposure time, as higher resolution will only require more image data to be presented to the light projector. Thus the building time of the 3D object will not be increased even when the resolution is increased. This is a very important issue, as traditional step and repeat machine configurations will need to have less resolution and thus a smaller static image size to achieve higher resolution.

The invention will provide a user selectable building area and a user defined resolution through SW commands and data files. No change of HW is required to obtain these important functionalities.

### DETAILED DESCRIPTION OF THE FIGURES

The invention will now be described in more detail by means of examples shown in the accompanying figures.
Figure 1 illustrates an example of a prior art exposure technique.
Figure 2 illustrates a sub-pixelation technique.
Figure 3 illustrates a step of dividing an image to be exposed into sub-images.
Figure 4 shows an example of a setup for a scrolling electronic light projector according to the invention.
Figure 5 shows two different examples of exposing images on a polymerizable material.
Figure 6 illustrates controlling the relative motion of the electronic light projector and the photo polymerizable material.
Figure 7 shows examples of embodiments for increasing the building area along the y direction of the photo polymerizable material.
Figure 8 shows another embodiment of a method and apparatus according to the invention.
Figure 9 shows a further example embodiment of a method and apparatus according to the invention.

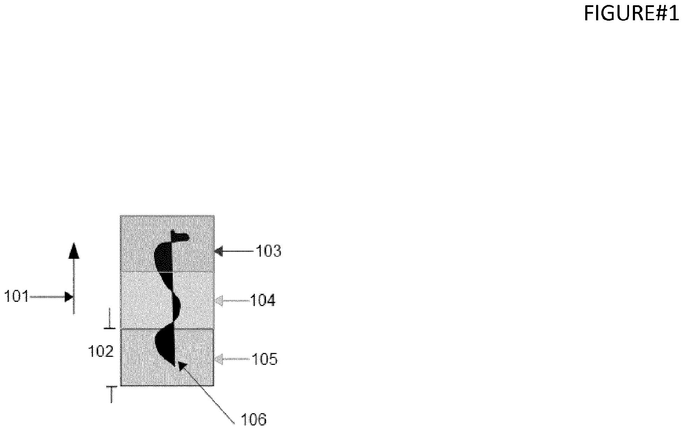

Figure 1 describes how a large exposed pattern image 106 is divided into (in this example) 3 images 103,104,105, where each of the images are exposed sequentially using "step and flash" procedure by an electronic light projector with a providing an image with a define image height certain image height 102. Reference number 101 indicates the direction of the relative motion between the electronic projector and the exposed material between exposure of each image

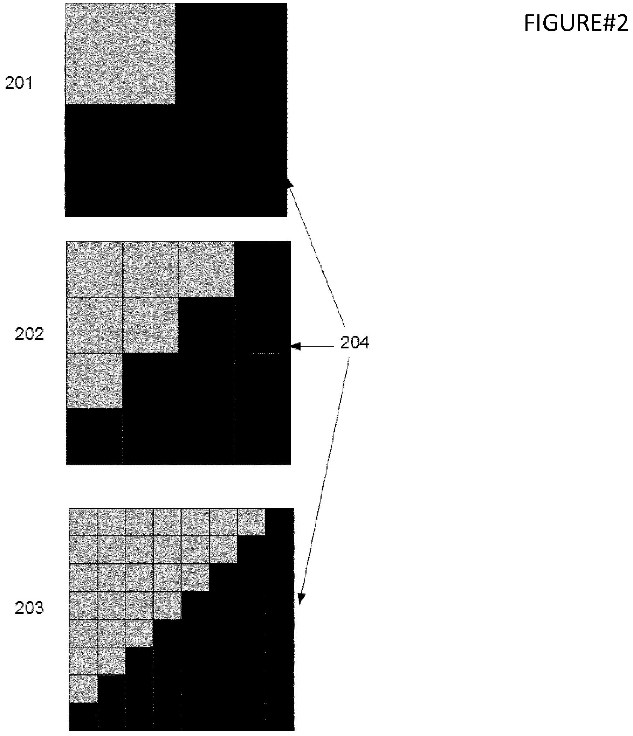

Figure 2 describes the sub-pixelation levels that are available in a scrolling projector using optical multiplexing technology. 201 shows how a 45 degrees angled object will be described using 4 native pixels, while 202 describes how the same object will be described when each of the 4 pixels are divided into 4 subpixels. 203 describes how the same object will be described when each native pixels is divided into 16 (4x4) sub pixels. It is clear from this illustration, that the sub-pixelation technique provides better resolution.

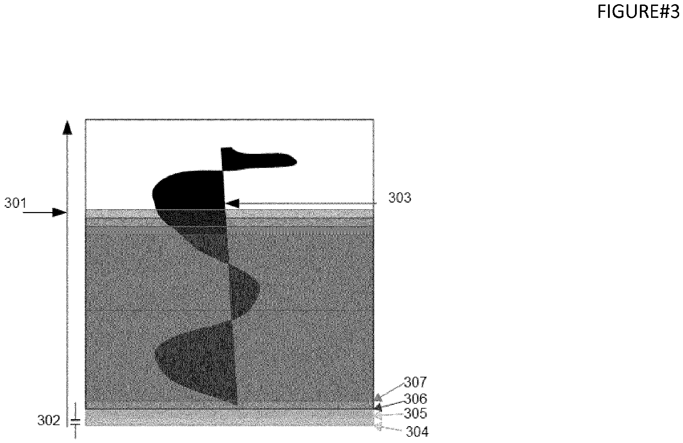

Figure 3 describes how a large exposed pattern image 303 is divided into multiple images (shown as 304,305,306,307 in this figure) having an internal distance of one pixel row 302. In opposite to the "step and flash" procedure, the electronic light projector is moving relative to the exposed material in a continuous way, while a new image is exposed by the projector each time the relative motion has reached 1 pixel. A motion controller provide synchronization signals to the projector each time a new image is to be set up.

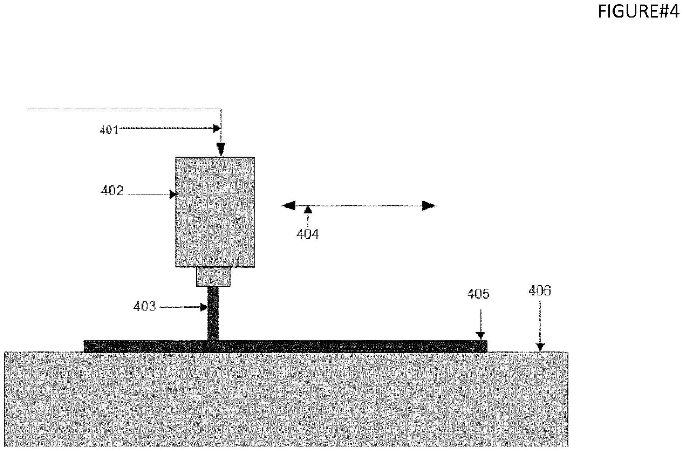

Figure 4 describes the setup for a scrolling electronic light projector 402 providing a light beam 403 and an exposed pattern to the light sensitive material 405 placed on the table 406. The electronic light projector 402 moves relative to the exposed material 405, while a synchronization signal 401 is provided by the motor controller to enable the projector to set up the next image in a image sequence.

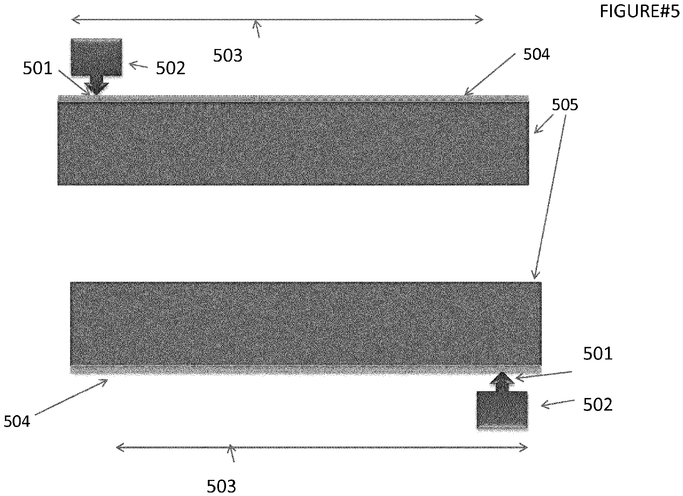

Figure 5 describes two different machine concepts where the electronic light projector 502 provides an exposed image 501 to the light sensitive media 504. The light sensitive media can either be placed at on top of the support material 505 as shown in the upper part of Figure 5, or the light sensitive media 504 can be placed at the bottom of the support material 505 as shown in the lower part of Figure#5. In this case the projector will be placed at the bottom of the machine providing a light beam pointing upwards. The projector will move relative to the light sensitive media in a one dimensional way 503.

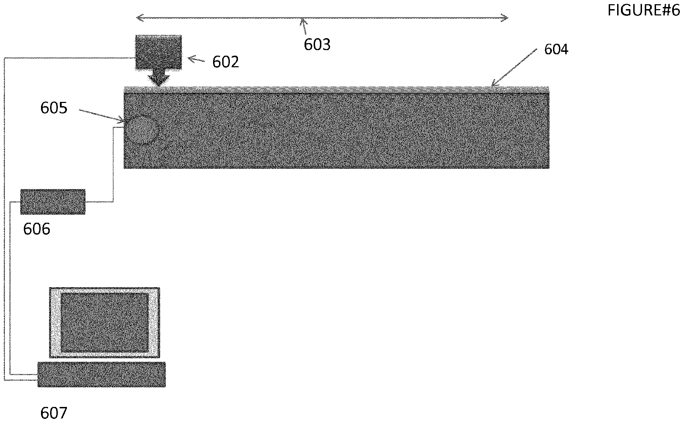

Figure 6 shows how the motion provided by the relative motion of the electronic light projector 602 and the light sensitive media 604 can be programmable by changing the motion area and the image data. The PC 607 controls the motion controller 606 and thus the motion area 603 operated by the motor 605. In the same way, the corresponding pattern image provided by the electronic light projector can have a programmable size so that the motion area is not larger than the exposed pattern image size, thus saving exposure time.

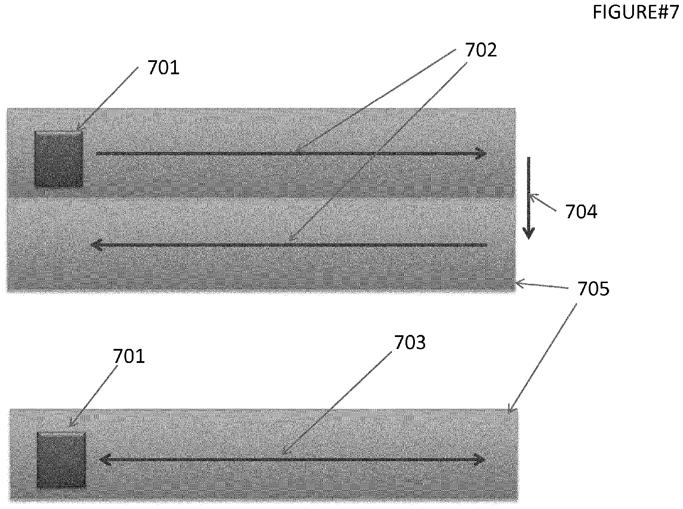

Figure 7 describes two different machine configurations that can be supported using a scrolling electronic light projector 701 with relative motion over a light sensitive media 705. The upper image shows how a configuration where the motion is initially in x direction 702, then a shift in y direction 704, before the motion is along the negative x direction 702 again. This will enhance the building area along the y direction and can be further increased by adding more shifts in y direction if required. The lower image shows a configuration where there is no y direction, but the electronic light projector 701 moves back and forth along the x axis 703 relative to the light sensitive media 705. This will provide a simpler and more cost effective solution for smaller building areas

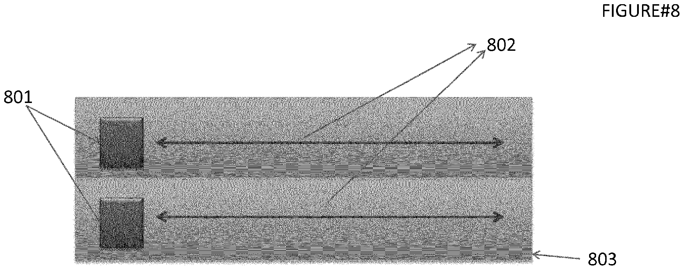

Figure 8 shows a third configuration where multiple (in this example two) scrolling electronic light projectors 801 move relative to the light sensitive media 803 back and forth along the x axis 802. This configuration will decrease the building time (exposure time) compared to using only one electronic light projector as shown in Figure 7

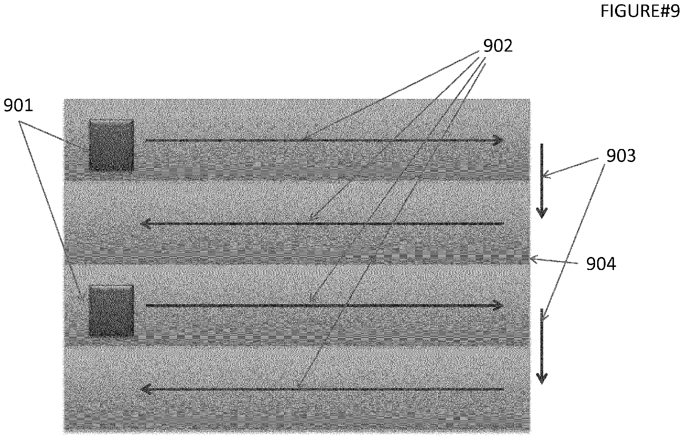

Figure 9 shows a fourth configuration where multiple (in this example two) scrolling electronic light projectors 901 move relative to the light sensitive media 904, first along the positive x axis 902, then a shift along the y axis 903 while there is no exposure , and then along the negative x axis 902. This configuration will both increase the build area and decrease the building time (exposure time) compared to configurations with single scrolling electronic light projectors and single axis (x axis only).

### ABBREVIATIONS

- DMD: Digital Micromirror Device
- DLP: Digital Light Processing
- SLM: Spatial Light Modulation

## Claims

1. Method for exposing a photo polymerizable material for solidification of material layer by layer to build a 3D object, comprising the following steps:
- dividing the image to be exposed into a number of sub images with an internal distance of at least one pixel,
- increasing resolution of the solidificated material by utilizing sub-pixelation methods that divides each pixel of the sub images into sub pixels, and
- exposing the sub images with increased resolution sequentially onto the photo polymerizable material by means of an electronic light projector by using image scrolling while the light projector is in motion relative to the exposed material.

2. Method according to claim 1, where the photo polymerizable material can be moved relative to light projector, and further using a synchronization signal to control the relative movement.

3. Method according to claim 2, where the next sub image in the sequence is exposed when the relative movement exceeds one pixel.

4. Method according to claim 2, where the movement is provided by a motor, and the synchronization signal from the motor or a motorcontroller triggers the sub image shift.

5. Method according to claim 1, comprising moving the photo polymerizable material along an x-axis.

6. Method according to claim 5, wherein a y-axis is added, so that the light projector moves along the y axis in steps relatively to the material after having scrolled along the x-axis.

7. Method according to one of the preceding claims, using multiple light projectors with parallel motion.

## Patentansprüche

1. Verfahren zum Belichten eines fotopolymerisierbaren Materials zur schichtweisen Materialverfestigung für den Aufbau eines 3D-Objektes, umfassend die nachfolgenden Schritte:
Unterteilen des zu belichtenden Bildes in eine Anzahl von Subbildern mit einem inneren Abstand von wenigstens einem Pixel;
Vergrößern einer Auflösung des verfestigten Materials unter Einsatz von Subpixelierungsverfahren, bei denen jedes Pixel der Subbilder in Subpixel unterteilt wird; und
sequenzielles Belichten der Subbilder mit vergrößerter Auflösung auf dem fotopolymerisierbaren Material mittels eines elektronischen Lichtprojektors unter Verwendung eines Bildscrollens, während sich der Lichtprojektor relativ zu dem belichteten Material bewegt.

2. Verfahren nach Anspruch 1, wobei das fotopolymerisierbare Material relativ zu dem Lichtprojektor bewegt werden kann, und des Weiteren verwendend ein Synchronisierungssignal zum Steuern bzw. Regeln der Relativbewegung.

3. Verfahren nach Anspruch 2, wobei das nächste Subbild in der Sequenz belichtet wird, wenn die Relativbewegung ein Pixel überschreitet.

4. Verfahren nach Anspruch 2, wobei die Bewegung von einem Motor bereitgestellt wird und das Synchronisierungssignal von dem Motor oder einer Motorsteuerung bzw. Regelung die Subbildverschiebung auslöst.

5. Verfahren nach Anspruch 1, umfassend ein Bewegen des fotopolymerisierbaren Materials entlang einer x-Achse.

6. Verfahren nach Anspruch 5, wobei eine y-Achse derart hinzugefügt wird, dass sich der Lichtprojektor entlang der y-Achse in Schritten relativ zu dem Material nach einem Scrollen entlang der x-Achse bewegt.

7. Verfahren nach einem der vorhergehenden Ansprüche, wobei mehrere Lichtprojektoren mit paralleler Bewegung verwendet werden.

## Revendications

1. Procédé d'exposition d'un matériau photopolymérisable pour la solidification d'une couche de matériau par couche, afin de construire un objet en 3D, comprenant les étapes suivantes :
- diviser l'image à exposer en un certain nombre de sous-images avec une distance interne d'au moins un pixel,
- augmenter la résolution du matériau solidifié en utilisant des procédés de sous-pixellisation qui divisent chaque pixel des sous-images en sous-pixels, et
- exposer les sous-images avec une résolution accrue séquentiellement sur le matériau photopolymérisable au moyen d'un projecteur de lumière électronique, en utilisant un défilement d'image pendant que le projecteur de lumière est en mouvement par rapport au matériau exposé.

2. Procédé selon la revendication 1, où le matériau photopolymérisable peut être déplacé par rapport au projecteur de lumière, et utilisant en outre un signal de synchronisation pour contrôler le déplacement relatif.

3. Procédé selon la revendication 2, où la sous-image suivante dans la séquence est exposée lorsque le déplacement relatif dépasse un pixel.

4. Procédé selon la revendication 2, où le déplacement est fourni par un moteur, et le signal de synchronisation du moteur ou d'un contrôleur de moteur déclenche un décalage de la sous-image.

5. Procédé selon la revendication 1, comprenant le déplacement du matériau photopolymérisable le long d'un axe x.

6. Procédé selon la revendication 5, dans lequel un axe y est ajouté, de sorte que le projecteur de lumière se déplace par étapes le long de l'axe y par rapport au matériau après avoir défilé le long de l'axe x.

7. Procédé selon l'une des revendications précédentes, utilisant plusieurs projecteurs de lumière à mouvement parallèle.
